# EUROPEAN PATENT APPLICATION

(11) **EP 1 895 532 A1**
(43) Date of publication of application: **05.03.2008**
(21) Application number: 07016589.9
(22) Date of filing: 23.08.2007
(51) Int. Cl.: G11B 7/22, G02B 7/02

(54) **Optical pickup device and optical disc reading device**

(30) Priority: 30.08.2006 JP 2006233646
(71) Applicant: Funai Electric Co., Ltd., Daito-shi, Osaka 574-0013 (JP)
(72) Inventor: Hatano, Shinya, Daito-shi, Osaka 574-0013 (JP)
(74) Representative: Grünecker, Kinkeldey, Stockmair & Schwanhäusser Anwaltssozietät

(57) **Abstract**

The present invention discloses an optical pickup device comprising: a first objective lens focusing laser beam generated by a laser generator; a second objective lens focusing the laser beam with a focal length different from that of the first objective lens; a first lens holding portion having a first seat whereon the first objective lens is put; a second lens holding portion having a second seat that is substantially ring shape; a ring shaped spacer put on the second seat and holding the second objective lens; a couple of foot portions protruding to the second seat from radially opposite positions in the spacer.

## Description

### TECHNICAL FIELD

The present invention relates to an optical pickup device and optical disc reading device. Especially the present invention relates to an optical pickup device and an optical disc reading device that read data recorded at plural kinds of optical discs by using two objective lenses.

### BACKGROUND ART

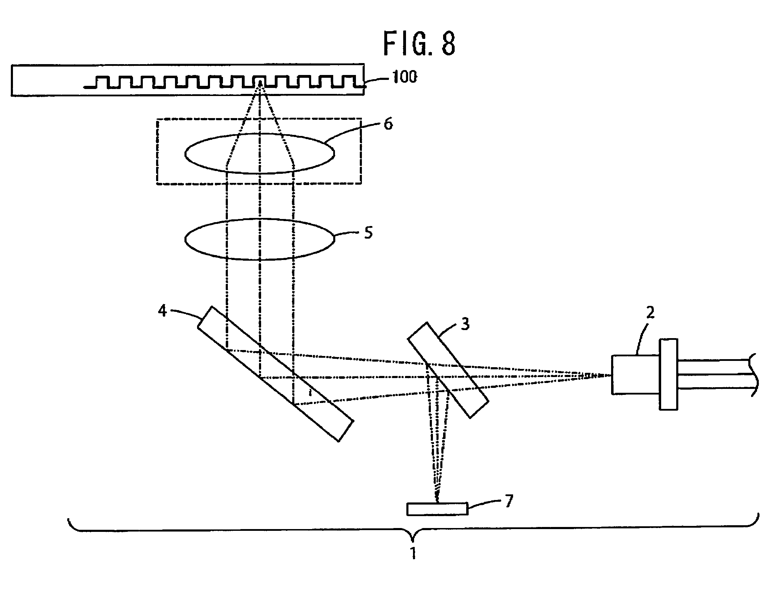

An optical pickup device described blow is known as a technology for reading data form optical discs like Digital Versatile Discs [DVDs] and compact discs [CDs]. The optical pickup device is shown in FIG 8. According to the FIG 8, the optical pickup device 1 is comprised of a laser diode 2 as a laser beam generator, a half mirror 3 that transmits the laser beam irradiated by the laser diode 2 and reflects the laser beam reflected by the optical disc, a mirror 4 that reflects the laser beam irradiated by the laser diode 2 to a predetermined angle, a collimate lens 5 that collimates the laser beam reflected by the mirror 4 and a objective lens 6 that focuses the laser beam collimated by the collimate lens 5 on the optical disc 100.

According to the optical pickup device 1, the laser beam irradiated by the laser diode 2 is reflected at the mirror 4 and irradiated to the objective lens 6. The objective lens 6 focuses incoming laser beam on a reading surface of the optical disc 100 with predetermined focal length. Pits are formed on the reading surface of the optical disc 100, the laser beam incoming to the pits is reflected and irradiated to the half mirror 3 through substantially same route that is substantially identical to the incoming route. And the half mirror 3 reflects the laser beam incoming and sends the laser beam to a detector 7. The detector 7 detects the laser beam and reads data based on detections of the laser beam. Therefore it is required that a distance between the objective lens 6 and the optical disc 100 is identical to a focal length of the objective lens 6, in order to accurately focus the laser beam from the irradiator on the pits formed on the reading surface of the optical disc 100.

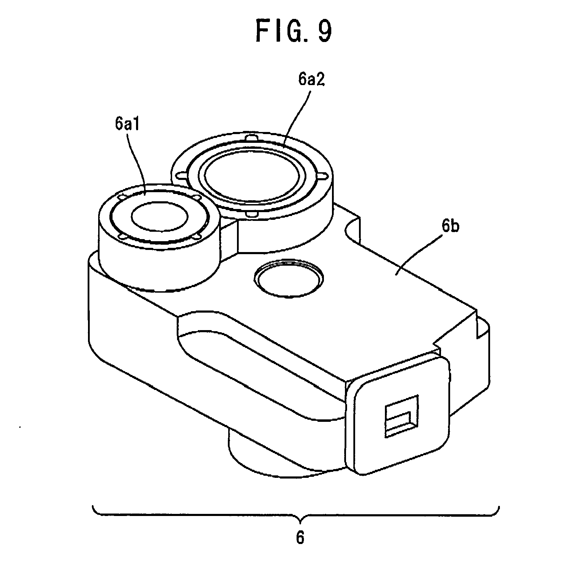

There are variations of sizes of the pits and positions of the pits on the reading surface in the DVDs and the CDs. Therefore, the focal length has to be adjusted corresponding to the variations. In JP-A No.H11-259891, a head unit with two objective lenses is used for reading the optical discs having the reading surfaces whose heights are different. FIG 9 shows the head unit having two objective lenses. The head unit 8 is consisted of a first objective lens 8a1, a second objective lens 8a2 and a lens holder 8b. The first objective lens 8a1 and the second objective lens 8a2 have different focal lengths each other. The first objective lens 8a1 and the second objective lens 8a2 are put on the lens holder 8b.

In this optical pickup device 1, in case the first objective lens 8a1 is used for reading the DVDs and the second objective lens 8a2 is used for reading the CDs, when the optical pickup device 1 reads the CDs, the optical pickup device 1 makes a movable part (not shown in FIG 9) move to transfer the lens holder 8b in order to make the laser beam from the laser beam generator be irradiated to the second objective lens 8a2. When the optical pickup device 1 reads the DVDs, the optical pickup device 1 makes the movable part move to transfer the lens holder 8b in order to make the laser beam from the laser beam generator be irradiated to the first objective lens 8a1. Then each of the focal length of the first and second lenses 8a1, 8a2 to the CDs and the DVDs is adjusted by transferring whole lens holder 8b. In particular each of the focal length of the first objective lens 8a1 and the second objective lens 8a2 is adjusted by controlling the focal length of the first lens 8a1. Therefore, the first objective lens 8a1 and the second objective lens 8a2 put on the lens holder 8b have to be adjusted to be parallel each other.

The adjustment mentioned above is achieved by tilting one of the first objective lens 8 a1 and the second objective lens 8a2 to be parallel to the other one by a jig e.g. with measuring a tilting angle by an autocollimator e.g.. This adjustment is time consuming because sufficient accuracy is required. After the tilting, the first objective lens 8a1 and the second objective lens 8a2 are fixed to the lens holder 8b by an adhesion bond.

JP-ANo.2005-174485 discloses a method comprised of forming seats for putting the objective lenses on the lens holder and adjusting angles of the objective lenses by inserting spacers into the seats.

And JP-A.No.H10-154342 discloses a method comprised of forming a yoke mechanism in a lens housing of the lens holder and adjusting angles of the objective lenses by the yoke mechanism.

The invention of JP-ANo.2005-174485 has a problem mentioned below. Weight of the lens holder where the seat is formed have to be light in order to refrain vibrations occurring by moving of the lens holder in pickup direction and focal direction for reading data unfailingly and preventing the lens holder from sympathetic vibrations with vibrations from a movable part. To make the lens holder light, generally the lens holder is made from resin called LCP [Thermo-tropic Liquid Crystal Polyester] e.g.. Therefore, it is difficult to make the seat geometrically accurate like a lens holder made from a metal material.

And the invention of JP-A No.H10-154342 has a problem mentioned below. That is an adjustment for forming the yoke mechanism at an opening of the lens holder is complicated. Further, a problem by the sympathetic vibrations arises because weight of the yoke mechanism is added to the weight of the lens holder, consequently the weight of the lens holder is increasing.

### DISCLOSURE OF THE INVENTION

An object of the present invention is providing an optical pickup device and optical disc reading device using the optical pickup device that make adjustment angles of objective lenses easy without increasing weight of a lens holder.

To achieve the object, an optical pickup device of an aspect of the present invention is configured to be comprised of: a first objective lens focusing laser beam generated by a laser generator; a second objective lens focusing the laser beam with a focal length different from that of the first objective lens; a first lens holding portion having a first seat whereon the first objective lens is placed; a second lens holding portion having a second seat that is substantially in a ring shape; a ring shaped spacer placed on the second seat and holding the second objective lens; a couple of foot portions protruding to the second seat from radially opposite positions in the spacer.

According to the configuration mentioned above, the second objective lens is holed by the spacer is placed to the second lens holding portion by putting the spacer on the second seat of the second lens holding portion with the foot portions supported by the second seat. The objective lens can be adjusted its angle by rotating the spacer along to the opening and tilting the spacer by utilizing the foot portions as fulcrums. High machining accuracy for making the second lens holding portion is not required, because geometrical variations of the second lens holding portion can be absorbed by tilting and rotating the spacer. Therefore the second lens holding portion can be made from even resin whose machining accuracy is worse than metal. And the second lens holding portion can be light because the second lens holding portion can be made from the resin. Therefore, unwanted vibration of the second lens holding portion can be reduced.

Another aspect of the present invention discloses an optical pickup device wherein: the second lens holding portion, the spacer and the second objective lens are concentrically placed.

An optional aspect of the present invention discloses an optical pickup device wherein: each of the foot portions is in a substantially triangular shape.

Another aspect of the present invention discloses an optical pickup device as wherein: each of the foot portions is in a substantially rectangular shape.

Another aspect of the present invention discloses an optical pickup device wherein: the spacer, the first lens holding portion and the second lens holding portion are made from resin.

A concrete aspect of the present invention discloses an optical disc reading device comprising: a laser diode generating laser beam; a first objective lens focusing the laser beam generated by the laser diode and irradiating the laser beam to a recording surface of an optical disc; a second objective lens focusing the laser beam with a focal length different from that of the first objective lens and irradiating the laser beam to the recording surface of the optical disc; an optical system irradiating the laser beam from the laser diode to one of the first objective lens and second objective lens; a detector detecting the laser beam reflected by the recording surface of the optical disc and converting a result of the laser beam detection to digital signals; a lens holder made from resin and formed in a substantially rectangular parallelepiped shape with a upper plane receiving the laser beam; a first lens holding portion made from resin and formed in a substantially tubular shape with a first opening parallel to the upper plane and with a first seat whereon the first objective lens is placed; a second lens holding portion made from resin and formed in a substantially tubular shape with a second opening parallel to the upper plane and with a second seat that is substantially in a ring shape; a ring shaped spacer made from resin concentrically placed on the second seat and concentrically holding the second objective lens; a couple of triangular foot portions protruding to the second seat from radially opposite positions in the spacer and working as fulcrums for tilting the spacer to make the second objective lens parallel to the first objective lens.

These and other features, aspects, and advantages of the invention will be apparent to those skilled in the art from the following detailed description of preferred non-limiting exemplary embodiments, taken together with the drawings and the claims that follow.

### BRIEF DESCRIPTION OF THE DRAWINGS

It is to be understood that the drawings are to be used for the purposes of exemplary illustration only and not as a definition of the limits of the invention. Throughout the disclosure, the word "exemplary" is used exclusively to mean "serving as an example, instance, or illustration." Any embodiment described as "exemplary" is not necessarily to be construed as preferred or advantageous over other embodiments.
Referring to the drawings in which like reference character(s) present corresponding parts throughout:

FIG 1 is an exemplary diagram showing a block configuration of an optical disc reading device according to the present invention;
FIG 2 is an exemplary diagram showing a block configuration of an optical pickup device;
FIG 3 is an exemplary perspective view showing a lens holder;
FIG 4 is an exemplary cross sectional view of the lens holder;
FIG 5 is an exemplary perspective view showing a spacer;
FIG 6 is an exemplary cross sectional view of a first and second objective lenses placed into a lens holder,
FIG 7 is an exemplary perspective view showing a spacer of second embodiment;
FIG 8 is an exemplary block diagram of a related optical pickup device; and
FIG 9 is an exemplary perspective view showing a related head unit arranged a couple of objective lenses.

### BEST MODES FOR CARRYING OUT THE INVENTION

The detailed description set forth below in connection with the appended drawings is intended as a description of presently preferred embodiments of the invention and is not intended to represent the only forms in which the present invention may be constructed and/or utilized.

As a detailed example of an optical pickup device according to the present invention, an optical disc reading device using the optical pickup device is explained. However, the optical pickup device according to the present invention can be not only used in the optical disc reading device but also applied to whatever the optical pickup device is utilized. Embodiments of the present invention will be explained according to an order mentioned below.
A. First embodiment
B. Summary of the first embodiment
C. Second embodiment
D. Summary of the second embodiment

### A. First Embodiment

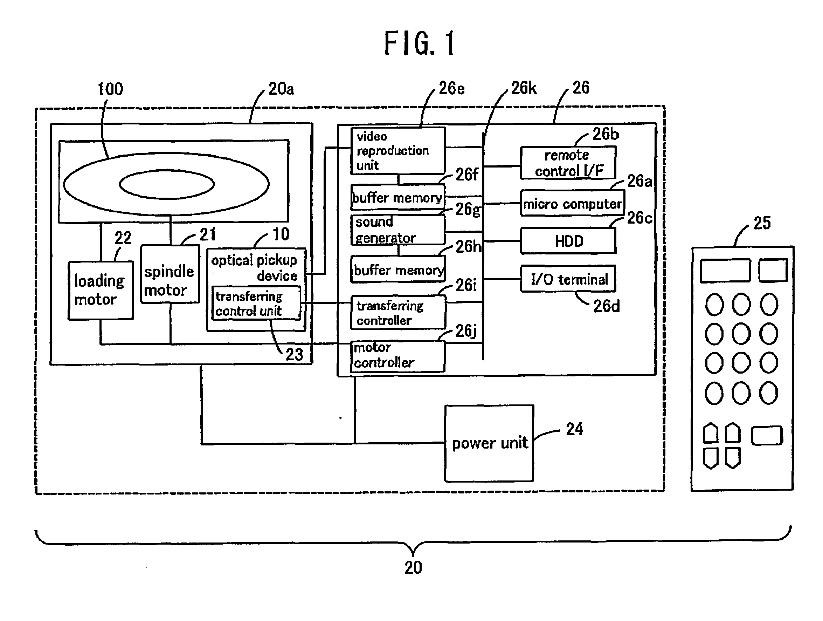

In what follows, an outline of components and functions of an optical disc reading device realizing the present invention is explained with referencing FIG 1, 2, 3, 4, 5 and 6. The optical disc reading device is used for reading data recorded at optical discs such like DVDs and CDs. The optical disc reading device 20 is configured as shown in FIG 1. In FIG 1 the optical disc reading device 20 is comprised of an optical pickup device 10, a spindle motor 21, a transferring control unit 23, a loading motor 22, a control board 26 and a power unit 24. The optical pickup device 10 reads data recorded at the optical disc 100. The spindle motor 21 rotates the optical disc 100. The loading motor 22 loads a tray 20a whereon the optical disc 100 is placed. The control board 26 controls processing for reading data and recording data e.g.. The power unit 24 supplies an electrical power.

According to the configuration described above, when a remote control 25 is operated.with placing the optical disc 100 on the tray 20a to play the optical disc.100, a remote control interface 26b receives an operation signal output from the remote control 25 and outputs the operation signal to a microcomputer 26a through a bus 26k. When the microcomputer 26a accepts the operation signal, the loading motor 22 is driven for loading the tray 20a into the optical disc reading device 20. Next, the microcomputer 26a drives the spindle motor 21 to rotate the optical disc 100.
Further, the microcomputer 26a selects a suitable obj ective lens of the optical pickup device 10 corresponding to the optical disc 100 which is going to be played.

Hollows called pits are formed on a recording surface of the optical disc 100 and the optical pickup device 10 irradiates a laser beam to the pits and reads data by detecting the laser beam reflected by the optical disc 100. Then the transferring control unit 23 controls a position of the optical pickup device 10, and the optical pickup device 10 is controlled so as to follow the pits of the optical disc 100 on rotating. The laser beam irradiated to the optical disc 100 is reflected and outgoing through a route same as the incoming route to the optical disc 100. The laser beam 10 irradiated to the optical disc 100 is reflected by the optical disc 100. And the laser beam 10 reflected by the optical disc 100 is detected by a detector and converted to digital video signals and digital sound signals. The digital video and sound signals are sent to the control board 26. In this specification, detailed explanations for data playing and data recording by the control board 26 are omitted because they are well known technologies. The digital video signals are sent to a video reproduction unit 26e. The video reproduction unit 26e generates image data corresponding to every frame, the image data is sent to external equipment through an input / output [I/O] terminal 26d with temporarily buffering in a buffer memory 26f.

At the same time, the sound signals acquired by the control board 26 are converted to sound data by a sound generator 26g. In the same manner, the sound data is sent to external equipment through an input / output [I/O] terminal 26d and buffered in a buffer memory 26h. Further if the video data and the sound data will be recorded at a hard disc drive [HDD] 26c of the optical disc reading device 20, the video data and the sound data buffered in the buffer memory 26f, 26h are written at predetermined addresses of the HDD 26c based on instructions by of the microcomputer 26a.

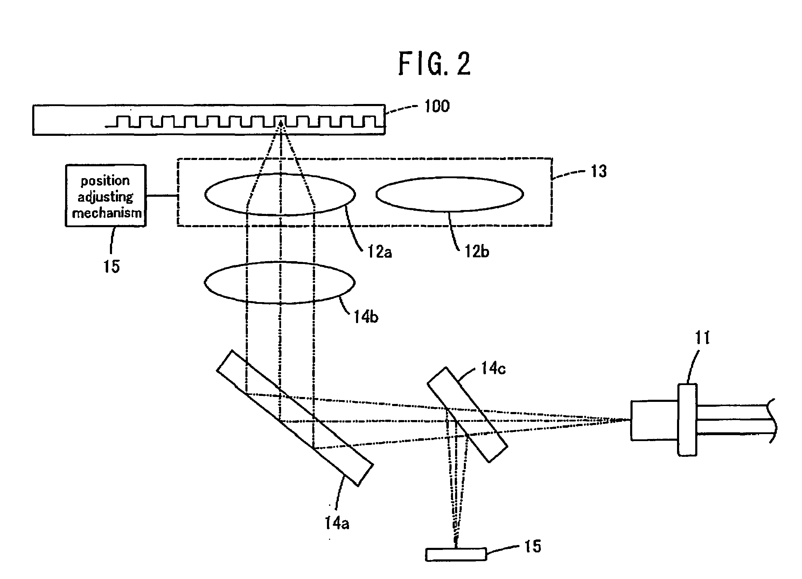

A configuration of the optical pickup device 10 will be explained below. FIG 2 is a block diagram of the optical pickup device 10. The optical pickup device 10 is configured for reading data by irradiating to the laser beam to the microscopic pits formed on the recording surface of the optical disc 100 and detecting the laser beam reflected by the pits. The pits are formed at a predetermined address area on the recording surface of the optical disc 100, the optical pickup device 10 have to accurately irradiate the laser beam to the pits by accurate transferring controlling of the optical pickup device 10. Therefore the optical pickup device 10 has a position controlling function (the transferring control unit 23 and a transferring controller 26i on the control board 26) for accurately irradiating and focusing the laser beam on the microscopic pits formed on the optical disc 100 rotated by the spindle motor 21. Further, the optical pickup device 10 has a function for adjusting the focal length and focal amount in order to playing each of different kinds of the optical discs 100 such like DVDs and CDs.

To realize the functions of the optical pickup device 10, the optical pickup device 10 is comprised of a laser diode 11, a couple of objective lenses 12a, 12b, a lens holder 13, an optical system 14, a position adjusting mechanism 15 and a detector 16. The laser diode 11 generates the laser beam. The objective lenses 12a, 12b focus the incoming laser beam. The lens holder 13 holds the objective lenses 12a, 12b. The optical system 14 reflects the laser beam from the laser diode 11 to irradiate the laser beam to the objective lenses 12a, 12b. The position adjusting mechanism 15 moves the lens holder 13 along a focusing direction perpendicular to the optical disc 100 and a tracking direction parallel to the optical disc 100 in order to follow the pits on rotating. Therefore, it is possible to accurately irradiate the laser beam to the rotating pits. The detector detects the laser beam reflected by the optical disc 100. The objective lenses 12a, 12b have different focal lengths and focal amounts. It can be possible to change the focal length and the focal amount corresponding to a kind of the optical discs by alternating the objective lenses 12a, 12b. Therefore, the optical pickup device 10 can read two or three kinds of the optical disc 100.

Further, the optical system 14 is comprised of a mirror 14a, a collimate lens 14b and a half mirror 14c. The laser beam irradiated by the laser diode 11 in transversal direction of FIG 2 is reflected to about 45 degree upper angle by the mirror 14a. The collimate lens 14b collimates the laser beam reflected by the mirror 14a. The half mirror 14c is arranged between the laser diode 11 and the mirror 14a. And the half mirror 14c gets through the laser beam irradiated by the laser diode 11 and reflects the laser beam reflected by the optical disc 100. According to this configuration, the laser beam irradiated by the laser diode 11 is reflected to about 45 degree upper angle by the mirror 14a and irradiated to the collimate lens 14b. The laser beam irradiated to the collimate lens 14b is collimated and sent to the objective lenses 12a, 12b. The objective lenses 12a, 12b focus the laser beam on the pits formed on the optical disc 100. Then the position adjusting mechanism 15 adjusts the position of the lens holder 13 to irradiate the laser beam focused by the objective lenses 12a, 12b to the pits accurately. In the present embodiment, when the position adjusting mechanism 15 adjust the position of the lens holder 13, the position adjusting mechanism 15 uses a magnet for tracking, a coil for tracking, a magnet for focusing and a coil for focusing.

The laser beam irradiated to the pits on the optical disc 100 is reflected at the pits and irradiated to the half mirror 14c through same route as the incoming route. The half mirror 14c irradiates the laser beam to the detector 15 by reflection. The detector 15 detects incoming laser beam from the half mirror 14c and converts the laser beam detection to digital video signals. The video signals are output to the control board 26. The detector 15 in the present invention uses photo diodes to convert the laser beam detection to the digital video signals. Further, if the optical disc 100 having the recording surface geometrically different from that of previous optical disc 100 will be played, the position adjusting mechanism 15 switches the objective lenses 12a, 12b to be used by moving the lens holder 13. These procedures are executed by processing of the microcomputer 26a and this processing also realizes each function of the optical pickup device 10.

As explained above, the objective lenses 12a, 12b are switched by the position adjusting mechanism 15 for changing the focal length and the focal amount for focusing the incoming laser beam. The changing the focal length and the focal amount of the incoming laser beam enables to play a plural of kinds of the optical discs like the DVDs and the CDs having different geometry of recording surfaces. The objective lenses 12a, 12b have to be assembled to keep being parallel each other during assembling, because the position adjusting mechanism 15 adjusts the position of the lens holder 13 with the objective lenses 12a, 12b as a whole. It's preferable that adjusting each angles of the objective lenses 12a, 12b can easily be done during the assembling them. Therefore, the optical pickup device 10 as the first embodiment of the present invention is configured to be easily adjusted each inclination angles of the objective lenses 12a, 12b.

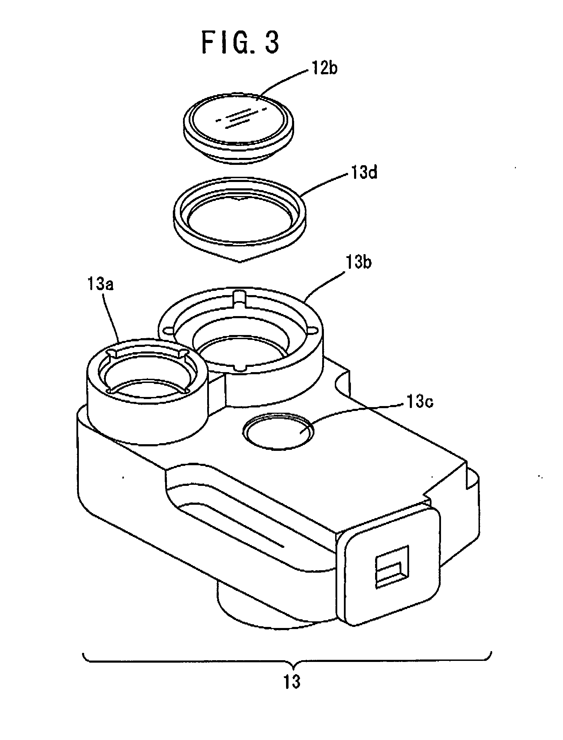

The configuration of the lens holder 13 will be explained below. FIG 3 is a perspective view showing the configuration of the lens holder 13 of the embodiment of the present invention. The lens holder 13 is comprised of a body, a first lens housing portion 13a, a second lens housing portion 13b and a shaft-inserting hole 13c. The body is formed in a rectangular parallelepiped shape and the laser beam is incoming to upper plane of the body. The first lens housing portion 13a and the second lens housing portion 13b are formed in a hollow tubular shape and disposed at an edge of the upper plane of the body. The shaft-inserting hole 13c is inserted a shaft that functions as a horizontal rotating axis of the lens holder 13 when the position adjusting mechanism 15 adjusts the position of the lens holder 13. The coils (for tracking and focusing) of the position adjusting mechanism 15 are arranged on front plane and a bottom plane of the body. The first lens housing portion 13a has a first opening 13a1 and the second lens housing portion has a second opening 13b1. The openings 13a1, 13b1 are opening to upper direction where the laser beam is incoming. The objective lenses 12a, 12b are placed to the openings 13a1, 13b1. Radiated grooves are formed along circular edge of the openings 13a1, 13b1.

The first objective lenses 12a is placed to the first opening 13a1, the second objective lenses 12b is placed to the second opening 13b1. Then the inclination angle of the second objective lens 12b is adjusted to be substantially parallel to that of the first objective lenses 12a by using a spacer 13d. If the angles of the objective lenses 12a, 12b don't become substantially parallel each other, the angle of the second objective lens 12b is adjusted again by adjusting the spacer 13d. Therefore, the lens housing portions 13a, 13b and the spacer 13d have to be configured to make adjusting the inclination angle of the second objective lens 12b easy. The detail configuration of the lens housing portions 13a, 13b and the spacer 13d will be explained below.

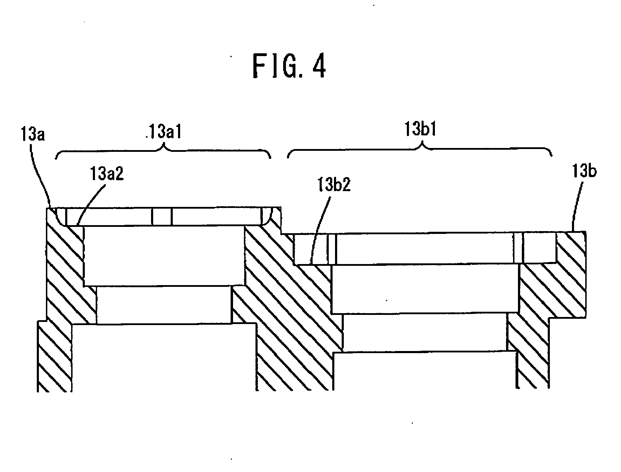

FIG 4 is a cross sectional view of the lens holder 13 that mainly illustrates the lens housing portions 13a, 13b. In the FIG. 4, the lens holder 13 has the lens housing portions 13a, 13b with the openings 13a1, 13b1 that are substantially parallel to the upper plane of the body. The lens housing portion 13a is comprised of a first seat 13a2 having a diameter that is different from a diameter of the first opening 13a1. The first objective lens 12a has a radially extended edge. The first objective lenses 12a is placed to the first lens housing portion 13a by being coupled a lower surface of the radially extended edge to the first seat 13a2. On the other hand, the second lens housing portion 13b has a second seat 13b2 that is formed at a position where is inward from the second opening 13b1 by a predetermined length. A diameter of the second seat 13b2 is wider than that of the first seat 13a1, the second objective lens 12b fixed by the spacer 13d is placed to the second lens housing portion 13b by placing lower surface of edge of the spacer 13 d on the, second seat 13b2.

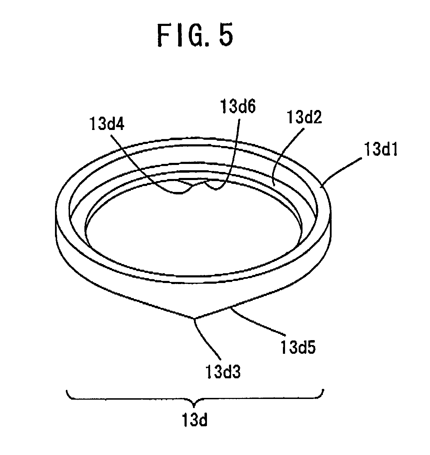

The spacer 13d is configured to enable to adjust the inclination angle of the second objective lens 12b. FIG. 5 is a perspective view showing the spacer 13d. In FIG 5 the spacer 13d is comprised of a receiving plane 13d1, a third seat 13d2 and a couple of foot portions 13d3, 13d4. The spacer 13d is configured to be in a ring shape to be rotated in the second lens housing portion 13b. The receiving plane 13dl is formed in an aerial ring shape in transversal cross section. The second objective lens 12b is concentrically placed on the spacer 13d and the edge of the second objective lens 12b is supported by the third seat 13d2. The foot portions 13d3, 13d4 are configured to enable to adjust the inclination angle of the spacer 13d. Thus the foot portions 13d3, 13d4 are arranged at radially opposite positions each other. In a transversal side view of the spacer 13d, the foot portions 13d3, 13d4 are vertically protruding below [aim to second seat 13b2] and the foot portions 13d3, 13d4 are triangular shape with slopes 13d5, 13d6 sloping to make peaks as the lowest portion of the foot portions 13d3, 13d4. When the foot portions 13d3, 13d4 are placed on the second seat 13b2, the peaks of the foot portions 13d3, 13d4 work as fulcrums for tilting the spacer 13d.

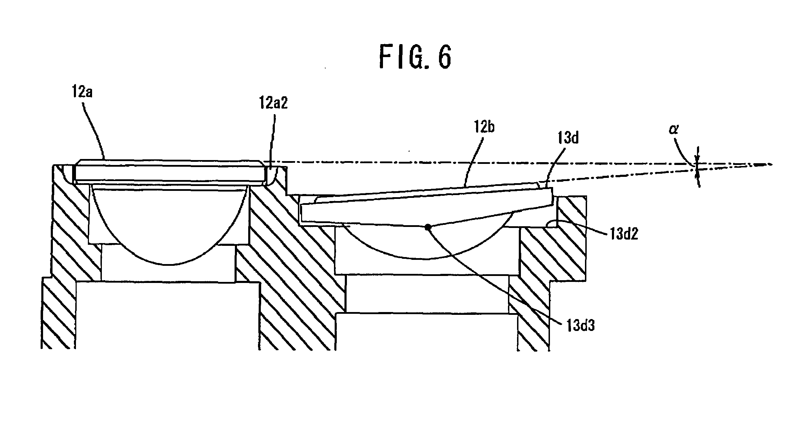

A method for adjusting the angle of the second objective lens 12b by tilting the spacer 13d will be explained below. According the method, the spacer 13d is provisionally fixed by a jig for adjusting with measuring the angle of the second objective lens 12b by a measurement apparatus like an autocollimator. Whatever can hold the spacer 13d and make the spacer 13d tilt and rotate as described below can be used as the jig. FIG 6 is a vertical cross sectional view of the objective lenses 12a, 12b being placed to the lens holder 13. In the FIG 6, the inclination angle of the second objective lens 12b is slanted off the inclination angle of the first objective lens 12a by α in anticlockwise direction.

Therefore a method described below is executed for adjusting the inclination angle of the second objective lens 12b. First the spacer 13d is rotated on the seat 13b2 to make a virtual straight line connecting the foot portions 13d3, 13d4 orthogonal to inclination direction of the first objective lens 12a. The inclination direction of the first objective lens 12a is a direction along a diameter connecting the highest point and the lowest point in the circular edge of the first objective lens 12a. Next the spacer 13d is tilted by α in clockwise direction with making the foot portions 13d3, 13d4 touching the seat 13d2 work as fulcrums. Therefore the spacer 13d can be tilted to make the inclination angle of the second objective lens 12b substantially parallel to that of the first objective lens 12a. In this state, the spacer 13d is fixed to second lens housing portion 13b by an adhesion bond. This leads that the second objective lens 12b is fixed at the inclination angle same as that of the first objective lens 12a.

### B. Summary of the first embodiment

As described above, according to the optical pickup device 10 of this embodiment, the second objective lens 12b can be adjusted its rotation angle by rotating the spacer 13d along the second opening 13b1 and adjusted its inclination angle by tilting the spacer 13d by making the foot portions 13d3, 13d4 work as fulcrums. High machining accuracy for making the lens holder 13 is not required, because geometrical variations of the lens housing portions 13a, 13b can be absorbed by tilting and rotating of the spacer 13d. Therefore the lens holder 13 can be made from even resin whose machining accuracy is worse than metal. And the lens holder 13 can be light because the lens holder 13 is made from the resin. Therefore, unwanted vibration of the lens holder 13 can be reduced.

### C. Second embodiment

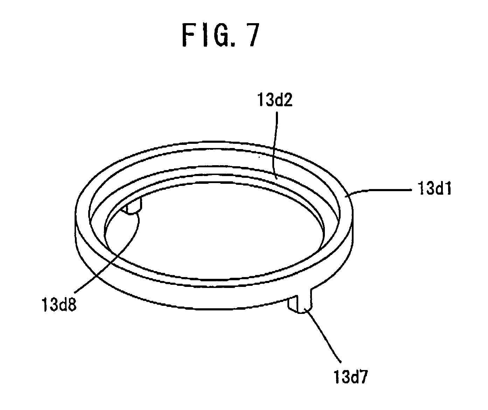

Optical pickup device of the second embodiment realizing the present invention will be explained below. FIG 7 is a perspective view of the spacer in the second embodiment. In the second embodiment the spacer 13d is shaped as explained below for easily forming the spacer 13d. The spacer 13d is a shape having foot portions 13d7, 13d8 protruding to lower direction from a receiving plane 13d1. The foot portions 13d7, 13d8 are formed rectangular shapes and allocated at radially opposite positions each other. When the second objective lens 12b fixed to the spacer 13d is attached to the second lens housing portion 13b, the spacer 13d can be tilted by using the foot portions 13d3, 13d4 as fulcrums like the spacer 13d of the first embodiment.

### D. Summary of the second embodiment

As described above, according to the optical pickup device 10 of this embodiment, advantages same as that of the first embodiment can be obtained, further another advantage described below can be obtained. That is, the shape of the spacer 13d is simple and easy-to-make because of the rectangular shaped foot portions 13d7, 13d8.

An object of the present invention is providing an optical pickup device and optical disc reading device using the optical pickup device that make adjustment angles of objective lenses easy without increasing weight of a lens holder.

To achieve the object, an optical pickup device of an aspect of the present invention is configured to be comprised of: a first objective lens focusing laser beam generated by a laser generator; a second objective lens focusing the laser beam with a focal length different from that of the first objective lens; a first lens housing portion having a first seat whereon the first objective lens is put; a second lens housing portion having a second seat that is substantially ring shape; a ring shaped spacer put on the second seat and holding the second objective lens; a couple of foot portions protruding to the second seat from radially opposite positions in the spacer.

According to the configuration mentioned above, the second objective lens is holed by the spacer is placed to the second lens housing portion by putting the spacer on the second seat of the second lens housing portion with the foot portions supported by the second seat. The objective lens can be adjusted its angle by rotating the spacer along to the opening and tilting the spacer by using the foot portions as fulcrums. High machining accuracy for making the second lens housing portion is not required, because geometrical variations of the second lens housing portion can be absorbed by tilting and rotating the spacer. Therefore the second lens housing portion can be made from even resin whose machining accuracy is worse than metal. And the second lens housing portion can be light because the second lens housing portion can be made from the resin. Therefore, unwanted vibration of the second lens housing portion can be reduced.

It is needless to say that the present invention is not limited to the embodiments described above, and for those skilled in the art the following are to be disclosed as embodiments of the present invention:
Appropriately modified combination of mutually replaceable members, configurations, or the like which are disclosed in the above embodiments;
Appropriately replaced or modified combination of members and configurations which are mutually replaceable with the members and configurations that are not disclosed in the above embodiment but are known arts; and
Appropriately replaced or modified combination of members and configurations which can be assumed to be substitutions for the members and configuration that are not disclosed in the above embodiments but are disclosed in the above embodiments by those skilled in the art based on the known arts or the like.

## Claims

1. An optical disc reading device having a laser diode generating laser beam, a first objective lens focusing the laser beam generated by the laser diode and irradiating the laser beam to a recording surface of an optical disc, a second objective lens focusing the laser beam with a focal length different from that of the first objective lens and irradiating the laser beam to the recording surface of the optical disc, an optical system irradiating the laser beam from the laser diode to one of the first objective lens and second objective lens and a detector detecting the laser beam reflected by the recording surface of the optical disc and converting a result of the laser beam detection to digital signals **characterized by** comprising:
a lens holder made from resin and formed in a substantially rectangular parallelepiped shape with a upper plane receiving the laser beam;
a first lens holding portion made from resin and formed in a substantially tubular shape with a first opening parallel to the upper plane and with a first seat whereon the first objective lens is placed;
a second lens holding portion made from resin and formed in a substantially tubular shape with a second opening parallel to the upper plane and with a second seat that is substantially in a ring shape;
a ring shaped spacer made from resin concentrically placed on the second seat and concentrically holding the second objective lens;
a couple of triangular foot portions protruding to the second seat from radially opposite positions in the spacer and working as fulcrums for tilting the spacer to make the second objective lens parallel to the first objective lens.

2. An optical pickup device having a first objective lens focusing laser beam generated by a laser generator and a second objective lens focusing the laser beam with a focal length different from that of the first objective lens **characterized by** comprising:
a first lens holding portion having a first seat whereon the first objective lens is placed;
a second lens holding portion having a second seat that is substantially in a ring shape;
a ring shaped spacer placed on the second seat and holding the second objective lens;
a couple of foot portions protruding to the second seat from radially opposite positions in the spacer.

3. An optical pickup device according to claim 2 **characterized in that**:
the second lens holding portion, the spacer and the second objective lens are concentrically placed.

4. An optical pickup device according to claim 2 or 3 **characterized in that**:
each of the foot portions is in a substantially triangular shape.

5. An optical pickup device according to claim 2 or 3 **characterized in that**:
each of the foot portions is in a substantially rectangular shape.

6. An optical pickup device according to claim 2 through 5 **characterized in that**:
the spacer, the first lens holding portion and the second lens holding portion are made from resin.
